(19) **Europäisches Patentamt / European Patent Office / Office européen des brevets**

(11) **EP 2 762 264 A1**

(12) # EUROPEAN PATENT APPLICATION
published in accordance with Art. 153(4) EPC

(43) Date of publication:
06.08.2014 Bulletin 2014/32

(51) Int Cl.:
*B23K 26/38* (2014.01)     *B23K 26/00* (2014.01)
*B23K 26/40* (2014.01)     *C03C 15/00* (2006.01)

(21) Application number: 12845658.9

(22) Date of filing: 05.10.2012

(86) International application number:
PCT/JP2012/076038

(87) International publication number:
WO 2013/065450 (10.05.2013 Gazette 2013/19)

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR

(30) Priority: 04.11.2011 JP 2011242326

(71) Applicant: Fujikura Ltd.
Tokyo 135-8512 (JP)

(72) Inventors:
• NUKAGA Osamu
Sakura-shi
Chiba 285-8550 (JP)

• YAMAMOTO Satoshi
Sakura-shi
Chiba 285-8550 (JP)
• WAKIOKA Hiroyuki
Sakura-shi
Chiba 285-8550 (JP)

(74) Representative: Cabinet Plasseraud
52, rue de la Victoire
75440 Paris Cedex 09 (FR)

(54) **METHOD OF MANUFACTURING SUBSTRATE PROVIDED WITH MICROPORES**

(57)     A method of manufacturing a substrate including a micro hole, includes: setting a scanning rate ($\mu$m/sec) of pulsed laser light to $1\times10^3$ to $4000\times10^3$ $\mu$m/sec, the scanning rate being defined as a relative speed of a focal point of the laser light relative to a substrate when the focal point moves, the laser light having a pulse duration less than 10 picoseconds; adjusting a repetition rate (Hz) of the laser light so that a pulse pitch ($\mu$m) represented by the following Formula (1) is 0.08 to 0.8 $\mu$m; irradiating the substrate with the laser light, scanning the inside of the substrate with the focal point into which the laser light is collected while shifting the focal point at a constant scanning rate so as to overlap the focal points, each of which is one pusle, thereby forming a modified region having a lowered resistance to etching, at a region through which the focal point passed or at an adjacent region thereof; and forming a micro hole in the substrate by removing the modified region by an etching treatment.

Formula (1)$\cdots$pulse pitch ($\mu$m) =

{the scanning rate ($\mu$m/sec) of the laser light}/{the repetition rate (Hz) of the laser light}

EP 2 762 264 A1

FIG. 1

**Description**

TECHNICAL FIELD

The present invention relates to a method of manufacturing a substrate including micro holes.

More particularly, the invention relates to a method of manufacturing a substrate including micro holes, which forms, inside a substrate, a modified region having a resistance to etching which is lowered by irradiating the substrate with pulsed laser light having a pulse duration on order of picoseconds or less, and forms the micro holes by etching the modified region.

This application claims priority from Japanese Patent Application No. 2011-242326 filed on November 4, 2011, the content of which is incorporated herein by reference in their entirety.

BACKGROUND ART

Conventionally, a method is known which irradiates an inside of a glass substrate with a pulsed laser, scans it with the focal point thereof at a constant scanning rate while shifting the focal point so that the irradiated regions, each of which is one pulse, overlap each other, forms a modified region having a lowered resistance to etching, at the region and near this region (around the region) through which the focal point passed, and thereafter forms a micro hole by selectively or preferentially etching the modified region (refer to Patent Document 1, and refer to Non-Patent Documents 1 and 2).

PRIOR ART DOCUMENTS

PATENT DOCUMENTS

[Patent Document 1] Japanese Unexamined Patent Application, First Publication No. 2006-303360

NON PATENT DOCUMENTS

[Non-Patent Document 1]"Polarization-selective etching in femtosecond laser-assisted microfluidic channel fabrication in fused silica" Optics Letters, Vol.30, Issue 14, pp. 1867-1869 (2005)
[Non-Patent Document 2]"Fabrication of high-aspect ratio, micro-fluidic channels and tunnels using femtosecond laser pulses and chemical etching" Optics Express, Vol. 12, Issue 10, pp. 2120-2129 (2004)

SUMMARY OF INVENTION

PROBLEMS TO BE SOLVED BY THE INVENTION

Generally, if modification of a substrate is insufficient, an etching rate in the etching step that is carried out after forming of a modified region in the substrate tends to be slow.

For this reason, it is generally thought that, in order to sufficiently modify a substrate in a conventional step of modifying the substrate, it is necessary to reduce a scanning rate of a laser light and to increase the integrated irradiation energy per unit area.

This means that, when a scanning rate is made to gradually increase while a repetition rate of pulsed laser irradiation is maintained constant, a region becomes small at which an irradiation position (modification position) due to a first irradiation pulse overlaps an irradiation position (modification position) due to a later irradiation pulse.

That is, since integrated irradiation energy per unit area becomes low, and a degree of modification at the modified region becomes low.

As a result, it is thought that an etching rate becomes low.

Consequently, in a conventional method, diligent modification of the substrate is carried out while a scanning rate is made low.

For example, a scanning rate is 0.03 mm/s (repetition rate = 100 kHz, pulse pitch = 0.0003 $\mu$m) in a manufacturing method of Non-Patent Document 1; and a scanning rate is 0.1 mm/s (repetition rate = 250 kHz, pulse pitch = 0.0004 $\mu$m) in a manufacturing method of Non-Patent Document 2.

In the case of forming, for example, a modified region having a length of 5 mm at such scanning rates, approximately 167 seconds and 50 seconds, respectively, are necessary.

The necessary time is shorter than a time required for an etching step (several hours); however, since a plurality of substrates can be collectively processed in the etching step such as using a large-scale etching bath or the like, the time required to process one substrate is sufficiently short.

On the other hand, since a laser irradiation apparatus is expensive, mass production by increasing the number of laser irradiation apparatuses is not worth the cost.

Additionally, it is also difficult to simultaneously and parallelly process a plurality of substrates by use of one laser irradiation apparatus.

Furthermore, as a laser irradiation apparatus carrying out a high precision machining, apparatuses that operate a light source or a working stage at low speed are main types thereof. Even if a device configuration that carries out a high speed operation is adopted, a high precision machining is difficult.

Consequently, in the case of manufacturing a substrate including micro holes, it is conventionally difficult to improve efficiency of a laser irradiation step, and there is a problem in that the laser irradiation step limits efficiency of the entire manufacturing process.

Therefore, in the case of manufacturing a substrate including micro holes, there is a problem in that the laser irradiation step limits the efficiency of the entire manufacturing process.

Additionally, a conventional method, which reduces the scanning rate of the laser irradiation to be low as described above and thereby increases integrated irradiation energy per unit area, causes a processing throughput to be low not only this but also causes a problem in terms of power consumption, an increase in investment for facilities, or the like.

The invention was conceived in view of the above-described circumstances and has an object thereof to provide a method of manufacturing a including a micro hole, which increases a scanning rate of laser light, obtains an etching rate that is greater than or equal to that of the prior art, and thereby improves manufacturing efficiency.

MEANS FOR SOLVING THE PROBLEMS

A method of a first aspect of the invention which manufactures a substrate including a micro hole, includes: setting a scanning rate ($\mu$m/sec) of pulsed laser light to $1 \times 10^3$ to $4000 \times 10^3$ $\mu$m/sec, the scanning rate being defined as a relative speed of a focal point of the laser light relative to a substrate when the focal point moves, the laser light having a pulse duration less than 10 picoseconds; adjusting a repetition rate (Hz) of the laser light so that a pulse pitch ($\mu$m) represented by the following Formula (1) is 0.08 to 0.8 $\mu$m; irradiating the substrate with the laser light, scanning the inside of the substrate with the focal point into which the laser light is collected while shifting the focal point at a constant scanning rate so as to overlap the focal points, each of which is one pusle, thereby forming a modified region having a lowered resistance to etching, at a region through which the focal point passed or at an adjacent region thereof; and forming a micro hole in the substrate by removing the modified region by an etching treatment.

$$\text{Formula (1)} \cdots \text{pulse pitch } (\mu\text{m}) =$$

$$\{\text{the scanning rate } (\mu\text{m/sec}) \text{ of the laser light}\}/\{\text{the repetition rate (Hz) of the laser light}\}$$

According to the method of the first aspect of the invention, which manufactures the substrate including the micro hole, a scanning rate of the laser light increases, an etching rate that is greater than or equal to that of the prior art is obtained, and thereby the manufacturing efficiency thereof is improved.

The laser scanning speed of the first aspect is higher than that in the prior art.

Furthermore, it is possible to form the modified region at the pulse pitch wider than that in the prior art by adjusting a repetition rate of the laser light.

The modified region that is formed under the above-described machining conditions is etched at the rate greater than that in the prior art.

In other words, it is possible to form the modified region, that can be removed at the etching rate greater than that in the prior art, in an amount of time (time required for a modifying step) shorter than that in the prior art.

Consequently, it is possible to shorten the time of the overall process of a combination of the modifying step and an etching step, and the manufacturing efficiency of the method of manufacturing the substrate including the micro hole can be improved more than that in the prior art.

In the first aspect, the method of the second aspect of the invention, which manufactures the substrate including the micro hole, forms a plurality of modified regions in an optical axis direction of the laser by one-time scanning by the laser light.

According to the manufacturing method of the second aspect, since a plurality of modified regions can be formed along the optical axis direction by one-time scanning by laser light, the manufacturing efficiency thereof can further increase.

Moreover, a distance between the formed modified regions can be shorter (narrower) than that in the prior art.

That is, the modified regions are arranged in a row along the optical axis direction at the pitch finer than that in the prior art, and it is possible to form the modified regions that are elongated (extended) in a direction (longitudinal direction) different from the optical axis direction.

On the other hand, in the case of forming a plurality of modified regions by a conventional method, since individual modified regions are sequentially formed, when a modified region that is formed later in the order of forming modified regions is formed by laser light, it is difficult to perform laser irradiation so as to avoid the previously-formed modified region.

For example, in the case of irradiating the previously-formed modified region with laser light, a degree of modification of the previous modified region varies, and there is a case where an etching rate becomes slow.

In the second aspect, the method of the third aspect of the invention, which manufactures the substrate including the micro hole, forms a plurality of micro holes by etching the modified regions.

According to this manufacturing method, the micro holes can be formed along the optical axis direction.

Furthermore, a distance between the micro holes in the optical axis direction can be a fine pitch finer than that in the prior art.

In any one of the first to third aspects, the method of the fourth aspect of the invention, which manufactures the substrate including the micro hole, set the peak intensity of one pulse of the laser light is greater than or equal to 7 TW/cm$^2$.

According to this manufacturing method, at the aforementioned laser scanning speed, it is possible to more easily form a modified region having a sufficiently-lowered resistance to etching.

Effects of the Invention

According to the method of the invention of manufacturing the substrate including the micro hole, at a speed laser scanning speed higher than that in the prior art, it is possible to form the modified regions at a pulse pitch wider than that in the prior art by adjusting the repetition rate of the laser light.

The modified region that is formed under the above-described machining conditions is a modified region that can be etched at the rate greater than that in the prior art.

In other words, it is possible to form the modified region, in which the etching rate greater than that in the prior art is obtained, in an amount of time (time required for a modifying step) shorter than that in the prior art.

As a result, since the time of the overall process of a combination of the modifying step and an etching step is shortened, the manufacturing efficiency of the method of manufacturing the substrate including the micro hole can be improved more than that in the prior art.

BRIEF DESCRIPTION OF THE DRAWINGS

FIG. 1 is a schematic view illustrating an example of a manufacturing method related to the invention.
FIG. 2 is a schematic view illustrating an appearance where a plurality of modified regions is discontinuously formed in a locus of a focal point of laser light.
FIG. 3 is a schematic view illustrating an example of a manufacturing method related to the invention.
FIG. 4 is a chart illustrating a relationship between an intensity distribution in laser light and a refractive index of the laser light inside the substrate.
FIG. 5 is a schematic view showing an appearance where laser light forms a plurality of light-collecting portions (focal points) in the optical axis direction.
FIG. 6 is a chart indicating test example 1 and illustrating a relationship between an etching rate and a pulse pitch.
FIG. 7 is a chart indicating test example 2 and illustrating a relationship between an etching rate and a pulse pitch.
FIG. 8 is a chart indicating test example 3 and illustrating a relationship between an etching rate and a pulse pitch.
FIG. 9 is a chart indicating test example 4 and illustrating a relationship between an etching rate and a pulse pitch.
FIG. 10 is a chart indicating test example 5 and illustrating a relationship between an etching rate and a pulse pitch.
FIG. 11 is a chart indicating test example 6 and illustrating a relationship between an etching rate and a pulse pitch.
FIG. 12 is a chart indicating test example 7 and illustrating a relationship between an etching rate and a pulse pitch.
FIG. 13A is a SEM image of the cross section corresponding to a diameter of a modified region formed in test example 1.
FIG. 13B is a SEM image of the cross section corresponding to a diameter of a modified region formed in test example 1.

FIG. 13C is a SEM image of the cross section corresponding to a diameter of a modified region formed in test example 1.

FIG. 14A is a SEM image (left) of the cross section corresponding to a diameter of a modified region formed in test example 1 and a SEM image (right) of the cross section in the longitudinal direction of the modified region.

FIG. 14B is a SEM image (left) of the cross section corresponding to a diameter of a modified region formed in test example 1 and a SEM image (right) of the cross section in the longitudinal direction of the modified region.

FIG. 14C is a SEM image (left) of the cross section corresponding to a diameter of a modified region formed in test example 1 and a SEM image (right) of the cross section in the longitudinal direction of the modified region.

FIG. 15 is a SEM image of the cross section corresponding to a first modified region and a second modified region which are formed in test example 1.

FIG. 16 is a chart indicating test example 8 and illustrating a relationship between an etching rate and a scanning rate of a focal point.

FIG. 17 is a chart indicating test example 9 and illustrating a relationship between an etching rate and a scanning rate of a focal point.

FIG. 18 is a chart illustrating a preferable combination with hatched lines from the combinations of repetition rates and scanning rates.

FIG. 19 is a block diagram illustrating an example of a manufacturing apparatus.

FIG. 20 is a block diagram illustrating an example of a manufacturing apparatus.

FIG. 21 is a block diagram illustrating an example of a manufacturing apparatus.

FIG. 22 is a block diagram illustrating an example of a manufacturing apparatus.

FIG. 23 is a block diagram illustrating an example of a manufacturing apparatus.

FIG. 24 is a block diagram illustrating an example of a manufacturing apparatus.

FIG. 25 is a block diagram illustrating an example of a manufacturing apparatus.

FIG. 26 is a block diagram illustrating an example of a manufacturing apparatus.

FIG. 27 is a block diagram illustrating an example of a manufacturing apparatus.

FIG. 28 is a block diagram illustrating an example of a manufacturing apparatus.

EMBODIMENTS FOR CARRYING OUT THE INVENTION

Hereinafter, the invention will be described based on preferred embodiments with reference to drawings.

A manufacturing method of a first embodiment of the invention includes: a modifying step that irradiates the inside of a substrate with the laser light having a pulse duration on order of picoseconds or less (for example, less than 10 picoseconds), scans it with the focal point into which the laser light is collected, thereby forming a modified region having a lowered resistance to etching at an adjacent region (circumference) through which the focal point passed; and an etching step that forms a micro hole in the substrate by removing the modified region by an etching treatment from the substrate.

Additionally, in this method, a scanning rate ($\mu$m/sec) of the laser light, that is defined as a relative speed of the focal point relative to the substrate when the focal point of the laser light moves inside of the substrate in the modifying step, is set to $1\times10^3$ to $4000\times10^3$ $\mu$m/sec, a repetition rate (Hz) of the laser light is adjusted so that a pulse pitch ($\mu$m) represented by the following Formula (1) becomes 0.08 to 0.8 $\mu$m

$$\text{Formula (1)}\cdots\text{pulse pitch (}\mu\text{m)} =$$

$$\{\text{the scanning rate (}\mu\text{m/sec) of the laser light}\}/ \text{ the repetition rate (Hz) of the laser light}\}$$

<Modifying Step>

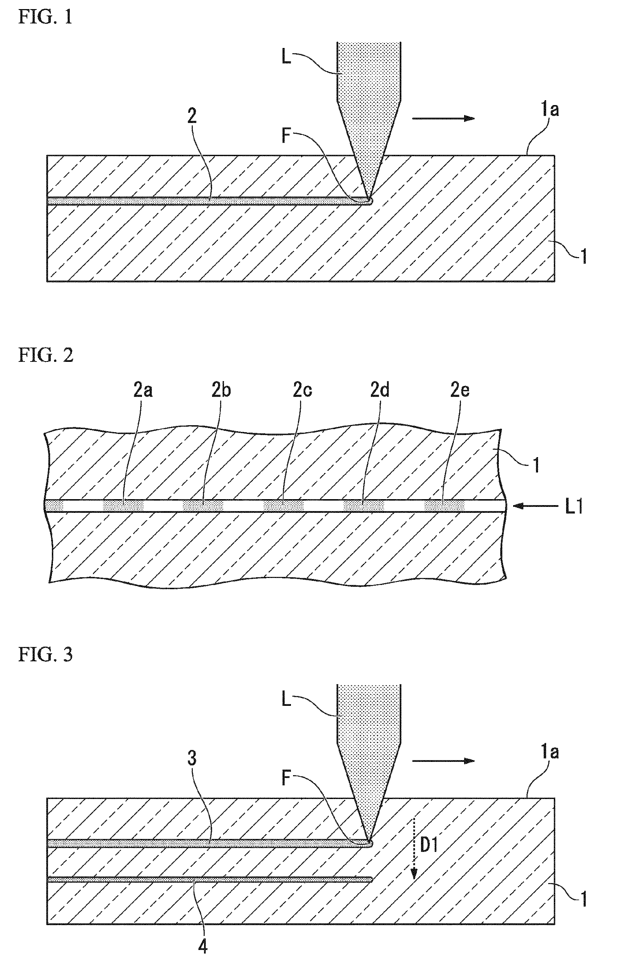

FIG. 1 is a conceptual view illustrating a modifying step.

A substrate 1 is irradiated with the laser light L through a first surface 1a thereof, and the inside of the substrate 1 is scanned with a focal point F at a constant scanning rate.

The laser light L is not continuous light and is pulsed laser light having a fixed repetition rate and a fixed pulse duration.

It is possible to form a modified region 2 having a lowered resistance to etching at a region through which the focal point F passed or at an adjacent region thereof (circumference).

An arrow in the drawing represents the scanning direction of the laser light L.

In the drawing, a lens that collects the laser light L is omitted and is not drawn.

In FIG. 1, the scanning direction of the focal point F is parallel to the first surface 1a; however, the scanning direction is not limited to this and may be directed to a desired direction.

In the modifying step of the first embodiment of the invention, it is preferable to use a glass substrate.

As a result of irradiating a glass with laser light under the aforementioned condition, it is possible to form a modified region having a sufficiently-lowered resistance to etching.

As the glass substrate, a glass substrate made of quartz, a glass substrate made of a glass containing silicate as a main component or a borosilicate glass, or a known glass substrate made of, for example, a non-alkali glass, a vycor glass, a micro-sheet glass, Pyrex (registered trademark), a soda-lime glass, Neoceram may be adopted.

Among those, a silica glass having excellent workability is preferable.

Moreover, a shape of the substrate is not limited to a flat plate and may be, for example, a spherical shape.

In this case, the substrate may be referred to as a base member.

In particular, a photosensitive glass cannot be applied to the invention since it has a reaction mechanism different therefrom.

Here, "photosensitive glass" means a glass in which a metal colloid is generated in a glass by ultraviolet irradiation and a baking treatment and crystals precipitate.

Since a resistance to HF in the region in which crystals are generated is lowered, the region can be removed by etching.

As the photosensitive glass, a glass containing $CeO_2$ is adopted.

Generally, it is thought that, when a glass containing $CeO_2$ is subjected to ultraviolet irradiation and a baking treatment, therefore, gold, silver, copper, or the like which is contained in the glass becomes metal colloid, and crystals of lithium metasilicate precipitate.

The region including crystals of lithium metasilicate is selectively (preferentially) etched by HF.

The range of a pulse width of the laser light having a pulse duration on order of picoseconds or less is not particularly limited and it is only necessary to be, for example, greater than or equal to 1 femtosecond and less than 10 picoseconds.

In the above-mentioned pulse duration, if it is less than 3 picoseconds or more preferably less than 2 picoseconds, it is more effective.

Particularly, in the description and claims, "order of picoseconds or less" means "less than 10 picoseconds".

As a device emitting laser light having the above-described pulse duration, for example, titanium-sapphire laser, fiber laser, or the like is used.

Additionally, as a laser device used in the manufacturing method of the invention, a device that is provided with a mechanism capable of adjusting a repetition rate of the laser light is preferable.

Since the pulse duration is on order of picoseconds or less, heating in a state where an electron temperature of the substrate (base member) and an ion temperature thereof are in a non-equilibrium condition is carried out at a light-collecting portion (focal point and the circumference thereof), that is, a processing which is caused by a so-called non-thermal processing proceeds.

For this reason, it is possible to maximally reduce a thermal diffusion length.

Furthermore, since a nonlinear processing which starts by multiphoton absorption is dominantly carried out, as a configuration of the modified region which is obtained after the processing, a micro hole on the order of nanometers to micrometers (for example, 1 nm to 500 $\mu$m) can be obtained.

On the other hand, in the case of using a pulsed laser on the order greater than picoseconds, for example, using laser light having a pulse duration greater than or equal to 10 picoseconds, a thermal processing in a state where an electron temperature of the substrate (base member) and an ion temperature thereof are in an equilibrium condition is dominantly carried out.

Since a thermal diffusion length is long in the thermal processing, it is difficult to perform a processing on the order of nanometers to micrometers.

As stated above, reaction mechanisms are completely different from each other at the boundary that is the pulse duration of approximately 1 to 10 picoseconds.

In the modifying step of the first embodiment of the invention, the inside of the substrate is irradiated with the laser light so as to focus the focal point therein.

At this time, a lens that condenses the laser light can be used.

If a cylindrical lens is used as an example, the wide area of the substrate can be irradiated with laser at the same time.

Furthermore, if a conical lens is used as an example, the wide area of the substrate in the vertical direction thereof can be irradiated with laser at the same time.

In addition, since the focal point of the laser light has a spread in a predetermined range, it is restated as "light-collecting portion of laser light".

Since the laser has the spread, it is possible to form a modified region at a region through which the focal point passed or at an adjacent region thereof (circumference).

A polarized light of the laser light in the modifying step may be any of a linear polarized light, an elliptical polarized light, and a circular polarized light.

A relationship between the polarized light of the laser light and the scanning direction of the focal point of the laser light is not particularly limited.

However, in the case of forming a finer micro hole, it is preferable to consider the relationship between the polarization direction of the laser light and the scanning direction of the focal point of the laser light.

In order to form a micro hole having a high aspect ratio, it is only necessary to increase a difference in etching rate between a modified region and a non-modified region (etching selectivity).

Regarding an etching selectivity, a higher etching selectivity is obtained in the below order:

(1) irradiation laser light has a linear polarized light, and the polarization direction thereof is vertical to the scanning direction;
(2) irradiation laser light has a circular polarized light; and
(3) irradiation laser light has a linear polarized light, the polarization direction thereof is parallel to the scanning direction.

The lower the irradiation intensity of the laser light in the modifying step, the lower the irradiation energy at the focal point; therefore, the aforementioned "a thermal range in a state where an electron temperature and an ion temperature are in a non-equilibrium condition" becomes small.

Consequently, the area of the modified region becomes small, and it is possible to form a micro hole having a small diameter after etching.

However, if the irradiation intensity of the laser light is excessively reduced, it is not possible to modify the substrate (base member) to the extent that etching can be carried out, and a micro hole cannot be formed.

In order to modify the substrate to the extent that etching can be carried out, it is necessary to set the peak intensity of the laser pulse to be greater than or equal to a predetermined value.

As a result of performing laser irradiation at the peak intensity of the pulse which is close to the lower limit of the range greater than or equal to the predetermined value, it is possible to form a micro hole having an extremely small diameter.

As a result of performing the irradiation at the peak intensity which is close to the lower limit, the effect of the above-described polarization direction of the laser light to etching selectivity (dependency) increases.

On the other hand, in the case where the peak intensity is sufficiently greater than the lower limit, for example, the peak intensity is greater than or equal to 40 TW/cm$^2$, the effect of the above-described polarization direction of the laser light to etching selectivity (dependency) is almost eliminated.

As a method of scanning the inside of the substrate with the focal point of the laser light, a method of moving a laser irradiation apparatus (laser light source) while the substrate is fixed, a method of moving a substrate while a laser irradiation apparatus is fixed, or a method of moving both a substrate and a laser irradiation apparatus is adopted.

As a system of driving a light source, for example, a driving system such as a linear motor, a piezoelectric actuator, or a galvanometer scanner may be adopted.

In such driving system, it is possible to set the scanning rate of the laser light ($\mu$m/sec) to $1\times10^3$ to $4000\times10^3$ $\mu$m/sec which is higher than that in the prior art.

In the invention, the scanning rate of the laser light means "a relative speed of the focal point relative to the substrate when the focal point of the laser light moves in the inside of the substrate".

In the case of scanning by the focal point of the laser light by moving both the substrate and the laser irradiation apparatus, the scanning rate of the laser light is a relative speed between the laser irradiation apparatus an the substrate.

In the invention, a pulse pitch of the laser light is defined by the following Formula (1).

$$\text{Formula (1)}\cdots\text{pulse pitch (}\mu\text{m)} =$$

$$\{\text{the scanning rate of the laser light (}\mu\text{m/sec)}\}/\{\text{repetition rate (Hz) of the laser light}\}$$

According to the Formula (1), the pulse pitch means a distance between a previous pulse and a subsequent pulse in the scanning direction of the focal point of the laser light.

Laser light used in the invention is a pulsed laser, a dotted modified region is formed by one pulse.

Accordingly, scanning is carried out at a constant scanning rate while shifting the focal point so that the focal points, each of which is one pulse, overlap each other.

As a result, it is thought that microscopic dotted modified regions (hereinbelow, simply referred to as a dot) corresponding to individual pulses overlap each other on the trajectory on which the inside of the substrate is scanned with the focal points of the laser light, and a linear modified region is thereby formed.

However, if the scanning rate of the focal point becomes excessively high, a pulse pitch (a distance between a previous pulse and a subsequent pulse) becomes excessively long, and a dot formed by a previous pulse may not be connected to a dot formed by a subsequent pulse on the trajectory.

That is, a plurality of dots may be intermittently (discontinuously, in a stepping-stonelike manner) formed on the trajectory.

FIG. 2 schematically shows an appearance where the dots are intermittently formed on the trajectory as described above.

As remarked above, in the case where the dots are intermittently formed at a distance, a micro hole cannot be formed in an etching step.

Generally, in the case of allowing the dots, each of which is one pulse, to overlap each other by slowing the scanning speed, such dots are connected to each other, and there is a tendency to be able to form a linear modified region.

In FIG. 2, dots 2a to 2e which are sequentially formed aligned along the locus L1 of the focal point of the laser light.

Basically, the distance between the centers of the dots adjacent to each other (center distance) corresponds to the pulse pitch of the individual laser pulses with which the points adjacent to each other are irradiated (a pulse pitch between a previous pulse and a subsequent pulse).

However, a phenomenon in that a subsequent pulse is trapped in the dot formed by a previous pulse may occur as described below.

In this case, the center distance does not necessarily correspond to the pulse pitch.

In the case where the distance (distance between adjacences) between the edges (ends) of the dots adjacent to each other is short, etching proceeds so that the dots adjacent to each other are connected in a subsequent etching treatment, and one microscopic connected hole corresponding to the trajectory L1 is thereby formed.

In the modifying step, the scanning rate of the laser light ($\mu$m/sec) is set to $1 \times 10^3$ to $4000 \times 10^3$ $\mu$m/sec which is higher than that in the prior art, a repetition rate (Hz) of the laser light is adjusted so that the pulse pitch ($\mu$m) becomes 0.08 to 0.8 $\mu$m, and it is thereby possible to make the pulse pitch larger than that in the prior art.

As a result of forming the modified region under such processing conditions, the modified region is obtained which has a higher etching rate such as being greater than or equal to that in the prior art.

As the scanning rate ($\mu$m/sec), $1 \times 10^3$ to $4000 \times 10^3$ $\mu$m/sec is preferable, $10 \times 10^3$ to $4000 \times 10^3$ $\mu$m/sec is more preferable, $20 \times 10^3$ to $4000 \times 10^3$ $\mu$m/sec is more preferable, $30 \times 10^3$ to $4000 \times 10^3$ $\mu$m/sec is more preferable, $30 \times 10^3$ to $2500 \times 10^3$ $\mu$m/sec is more preferable, and $30 \times 10^3$ to $800 \times 10^3$ $\mu$m/sec is most preferable.

As a result of adopting the scanning rate that is greater than or equal to the lower limit of the aforementioned range (i.e., greater than or equal to $1 \times 10^3$ $\mu$m/sec), the manufacturing efficiency significantly increases more than that in the prior art.

As a result of making it less than or equal to the upper limit of the aforementioned range (i.e., less than or equal to $4000 \times 10^3$ $\mu$m/sec), it is possible to sufficiently lower the etching resistance of the modified region.

As the repetition rate of the laser light (kHz), 1 to $50 \times 10^3$ kHz is preferable, 10 to $30 \times 10^3$ kHz is more preferable, 20 to $30 \times 10^3$ kHz is more preferable, 30 to $30 \times 10^3$ kHz is more preferable, and 30 to $3 \times 10^3$ kHz is more preferable, and 30 to $1 \times 10^3$ kHz is most preferable.

As a result of being in the aforementioned range (i.e., 1 to $50 \times 10^3$ kHz), it is possible to sufficiently lower the etching resistance of the modified region.

As the pulse pitch ($\mu$m), 0.08 to 0.8 $\mu$m is preferable, 0.1 to 0.6 $\mu$m is more preferable, 0.13 to 0.5 $\mu$m is more preferable, and 0.13 to 0.4 $\mu$m is most preferable.

As a result of being in the aforementioned range (i.e., 0.08 to 0.8 $\mu$m), it is possible to sufficiently lower the etching resistance of the modified region.

In the first embodiment of the invention, the peak intensity of the laser light (laser fluence per unit pulse / pulse duration) is preferably greater than or equal to 7 TW/cm$^2$.

When it is greater than or equal to 7 TW/cm$^2$, it is possible to form the modified regions having a resistance to etching which is reduced.

Furthermore, by setting the peak intensity of the laser light to 20 TW/cm$^2$ or more, it is possible to form a plurality of modified regions having a resistance to etching, which is sufficiently reduced, to be aligned in the optical axis direction of the laser.

The upper limit of the peak intensity of the laser light is not particularly limited unless it is an extremely high intensity such as it breaking down a substrate; and for example, 700 TW/cm$^2$ is adopted as the limit.

A wavelength (nm) of the laser light used in the first embodiment of the invention is not particularly limited; and as the wavelength, for example, 300 nm to 2000 nm is preferable, 300 nm to 1600 nm is more preferable, and 400 nm to 1600 nm is most preferable.

A pulse duration of the laser light used in the first embodiment of the invention is not particularly limited and is, for example, preferably greater than or equal to 1 fs and less than 10 ps, preferably greater than or equal to 1 fs and less than 3 ps, and more preferably greater than or equal to 1 fs and less than 2 ps.

FIG. 3 shows a conceptual view illustrating the case of forming a plurality of modified regions 3 and 4 to be arranged along the optical axis direction D 1 of the laser light L.

The first surface 1a of the substrate 1 is irradiated with the laser light L and the inside of the substrate 1 is scanned with the focal point F in parallel to the first surface 1a.

It is possible to form a first modified region 3 having a lowered resistance to etching at the adjacent region (circumference) through which the focal point F passed and to form a second modified region 4 in parallel with to the first modified region 3 at a second surface side of the substrate 1 (surface on the opposite side of the first surface).

The solid arrowed line in the drawing represents the scanning direction of the laser light L and the dotted arrowed line in the drawing represents the optical axis direction D 1 of the laser.

In the drawing, a lens that collects the laser light L is omitted and is not drawn.

As one of the reasons that a plurality of modified regions can be formed to align in the optical axis direction of the laser as shown in FIG. 3, it believed that a refractive index increases in accordance with the intensity of the laser as a result of allowing strong laser light having a high degree of pulse peak value to enter the substrate.

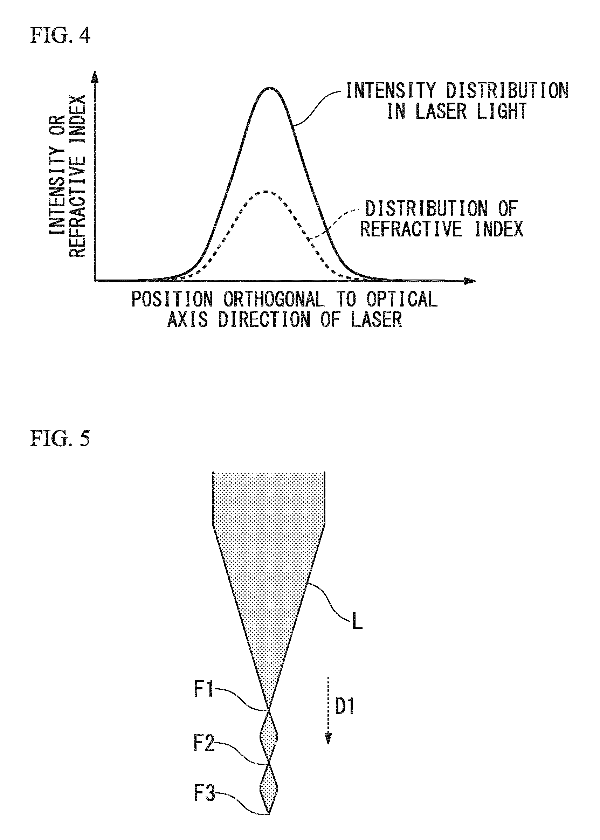

As shown in FIG. 4, since the laser beam has the highest energy at the center of the distribution thereof, the refractive index of the laser is the highest at the center of the distribution and becomes lower as it becomes displaced from the center.

For this reason, when the collected laser light enters a substrate as shown in FIG. 5, since it collects at a higher numerical aperture and self-focusing is thereby carried out, the light-collecting portion F1 (focal point) slightly shifts to the front of the optical path (the front of the optical axis).

Thereafter, since plasma that is generated at the light-collecting portion F1 reduces a refractive index and self-defocusing is carried out, it is thought that the laser light temporarily spreads, self-focusing (F2) is carried out again as the laser light further travels toward the direction of the end of the optical axis.

This phenomenon is generally referred to as filamentation.

As described above, as a result of repeating the self-focusing and the self-defocusing in the optical axis direction of the laser, a plurality of light-collecting portions are formed.

It is possible to form a plurality of modified regions inside the substrate by scanning it with the laser in this state.

The number of repeating the light-collecting portions formed in the optical axis direction depends on the laser power intensity and is generally 1 to 6.

In the formed light-collecting portions, particularly, in the light-collecting portion that is formed at the end of the optical axis direction of the laser, the ability to modify the substrate becomes low.

That is, capabilities of forming a modified region are F1 > F2 > F3 in the light-collecting portions shown in FIG. 5.

Consequently, generally, in the modified region that is formed at the front side (light source side) of the optical axis direction of the laser, a diameter of a micro hole that is to be formed after etching becomes large.

The number of repeating the light-collecting portions (focal point) can be controlled by adjusting a numerical aperture of a lens (N.A.) or pulse peak intensity.

In the first embodiment of the invention, it is possible to adjust a distance between the modified regions which are to be formed in the optical axis direction by adjusting a numerical aperture (N.A.) of the lens collecting laser light.

Specifically, as the numerical aperture becomes higher, a distance between the light-collecting portions adjacent to each other becomes short, and it is possible to shorten (narrow) a distance between the modified regions which are to be formed.

Particularly, as a result of adjusting the numerical aperture, as shown in FIG. 3, a distance between, for example, the first modified region 3 and the second modified region 4 can be adjusted in the range of, for example, 0.7 to 25 $\mu$m.

In the first embodiment of the invention, an angle formed between the optical axis of the laser and the scanning direction is not particularly limited, is preferably 30 to 90 degrees, is more preferably 45 to 90 degrees, and is more preferably 60 to 90 degrees.

As long as it is in the aforementioned range, it is possible to further easily form a plurality of modified regions in the optical axis direction.

Particularly, in the description and claims, the angle is an angle that can be in the range of 0 to 90 degrees.

Here, the angle formed between the optical axis of the laser and the scanning direction means an acute angle of angles formed between a straight line representing the optical axis of the laser and a straight line representing the scanning direction.

This angle does not mean an angle formed between a vector representing the optical axis of the laser and a vector representing the scanning direction (the angle formed between both vectors is in the range of 0 to 180 degrees).

This means that, the angle formed between the optical axis of the laser and the scanning direction can be in the range of 0 to 90 degrees.

In the case where a cross-sectional configuration orthogonal to the longitudinal direction of the modified region which is formed by one-time scanning in the modifying step is similar to an ellipse, the minor axis thereof can be adjusted (formed) in the range of, for example, 0.02 to 10 μm.

Additionally, the major axis can be adjusted (formed) in the range of, for example, 0.3 to 12 μm.

As an adjustment method, a method of varying the peak intensity of laser light, a numerical aperture of a lens, or the like may be adopted as an example.

As the peak intensity increases or as the numerical aperture becomes low, the modified region has tended to be large.

A cross-sectional configuration orthogonal to the longitudinal direction of the modified region which is formed after laser irradiation is a configuration which can be roughly similar to a circle or an ellipse.

The diameter of the modified region which is illustrated in the description as an example is a diameter of an approximate circle or a major axis of an approximate ellipse.

<Etching Step>

As a method of forming a micro hole by etching a modified region, a known method is applicable as the method does not depart from the scope of the present invention.

For example, a modified region is removed from the inside of the substrate and a micro hole can be formed by immersing the substrate in an etching liquid (etchant) in a state where the end of the modified region which is formed inside of the substrate is exposed to the top surface of the substrate.

As the etching solution, a water solution including, for example, hydrofluoric acid (HF) or potassium hydroxide (KOH).

A diameter of the micro hole which is to be formed after etching can be adjusted by adjusting time of immersion in the etching solution.

As an example, in the case where the modified region having a minor axis of 0.02 to 10 μm is formed, the micro hole having a diameter of 0.04 μm or more can be formed by etching the modified region.

Moreover, a region of the substrate which is other than the modified region may be etched at a slow etching rate.

Because of this, a diameter of the micro hole can be arbitrarily varied by appropriately adjusting etching conditions such as a concentration of an etching solution or an etching time.

Furthermore, as a result of extending etching time, a plurality of modified regions which extend along the optical axis and are formed by one-time laser irradiation can be formed so as to merge into one hole (micro hole).

A configuration of the micro hole which is formed after etching is a shape which can be similar to a circle or an ellipse.

The diameter of the micro hole which is illustrated in the description as an example is a diameter of an approximate circle or a major axis of an approximate ellipse unless otherwise specified.

(Manufacturing Apparatus)

An embodiment of a manufacturing apparatus which is suitable for use in the method according to the invention manufacturing a substrate including a micro hole will be described below.

The manufacturing apparatus of the first embodiment is provided with at least a laser light source, an optical system, a working stage, and a control system.

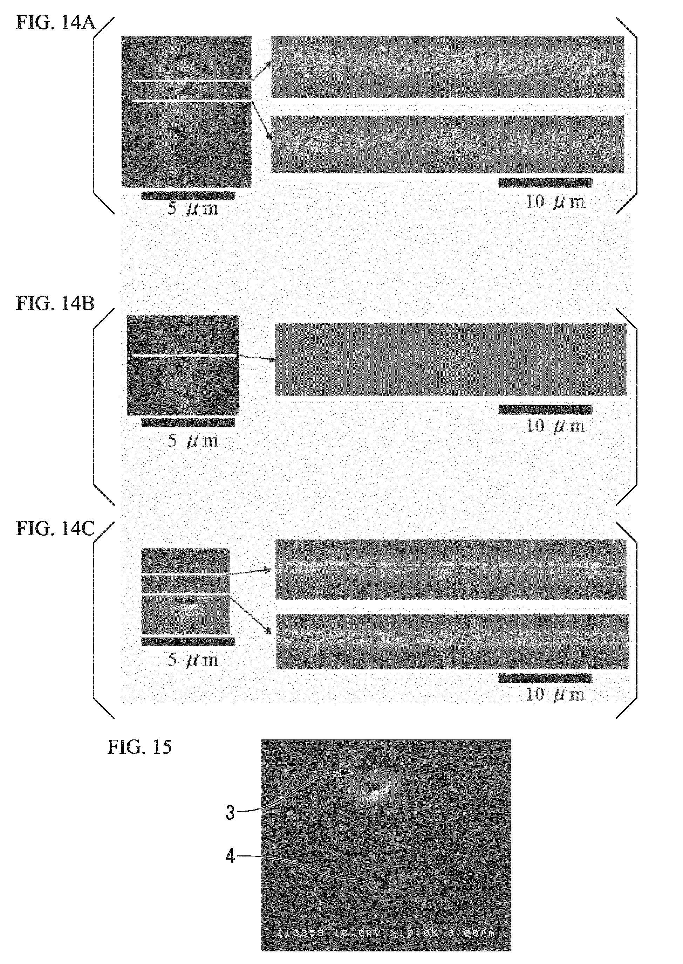

The control system can control a laser light source, an optical system, or a working stage so that the relationship between the repetition rate (kHz) of the laser light source and the scanning rate (mm/sec) of the focal point of the laser light is in the range defined by the hatched lines in the chart shown in FIG. 15.

The range of the hatched lines is a region surrounded by three straight lines which are represented by the following Formulas (a1) to (a3) in the x-y coordinate system in which the horizontal axis (x-axis) means the repetition rate (kHz) of the laser light source and the vertical axis (y-axis) means the scanning rate (mm/sec) of the focal point of the laser light.

Formula (a1); $y = 0.8x$
Formula (a2); $y = 0.08x$
Formula (a3); $x = 1000$

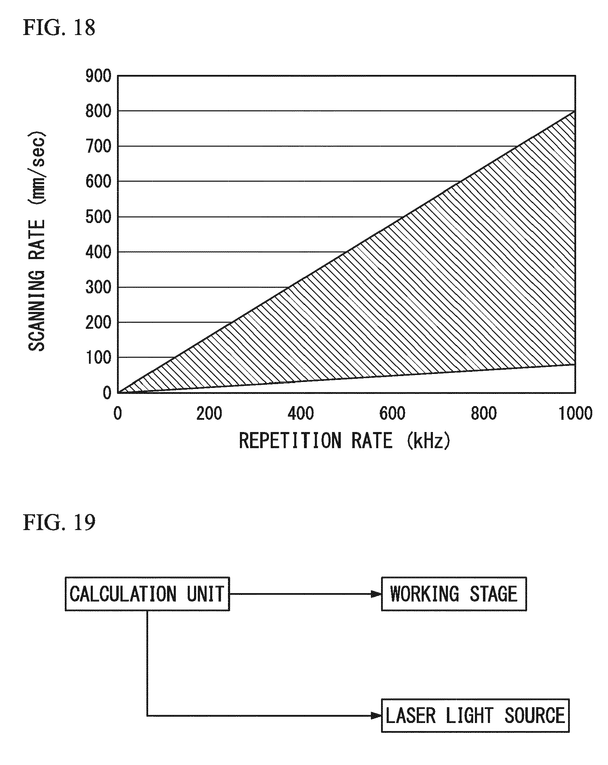

An example of the manufacturing apparatus (manufacturing apparatus A) will be described with reference to a block diagram shown in FIG. 19.

The manufacturing apparatus A includes, a laser light source, a working stage, and a calculation unit that serves as the control system.

As the calculation unit, a known information processing device is applicable.

A value of a desired scanning speed or a repetition rate and a desired pulse pitch are input to the calculation unit, and the repetition rate or the scanning rate which corresponds to the input value is obtained based on the Formula (1) in the calculation unit.

Next, an output signal used in an operation at the scanning rate and the repetition rate which are determined by the calculation unit is output to each of the working stage and the laser light source.

As a result, the inside of the substrate mounted on the working stage is scanned with the focal point of the laser light under the condition represented by the range of the hatched lines in the chart, and it is possible to form the modified regions.

A practical scanning rate of the working stage and a practical repetition rate of the laser light source may be monitored by the calculation unit.

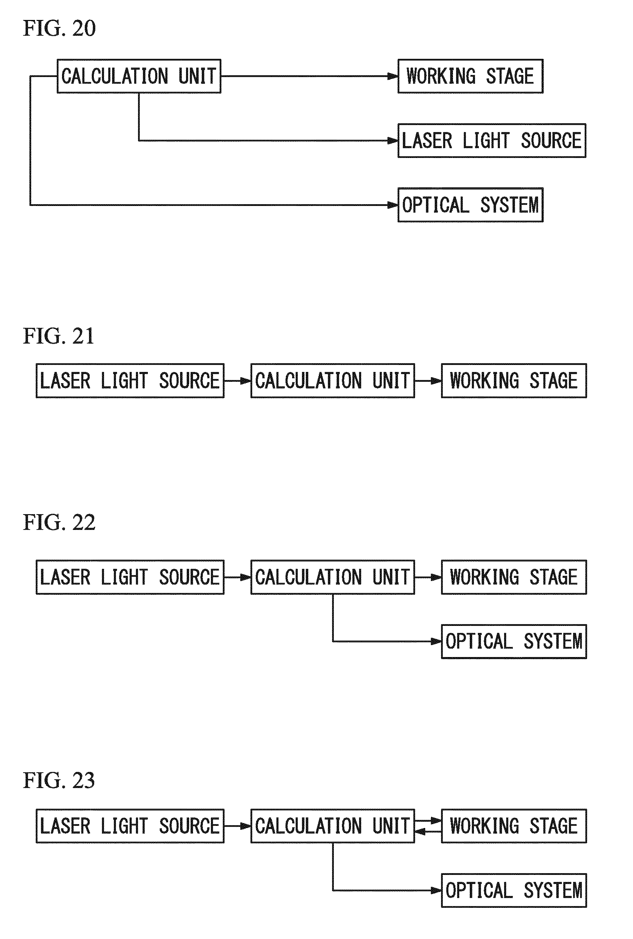

An example of the manufacturing apparatus (manufacturing apparatus B) will be described with reference to a block diagram shown in FIG. 20.

The manufacturing apparatus B includes, a laser light source, a working stage, an optical system, and a calculation unit that serves as the control system.

it is the same as the manufacturing apparatus A with the exception of having an optical system.

In the manufacturing apparatus B, a shutter provided at the optical system prevents a substrate on the working stage from being irradiated with laser light until the laser light source reaches a predetermined repetition rate.

As a method instead of this, that is, instead of light shielding by use of the shutter, as a result of sufficiently lowering the laser intensity, control may be carried out so as not to process (modify) the substrate even where a substrate is irradiated with laser light.

the working stage may be transferred in a state where the optical system is closed by the shutter.

In this case, it is possible to move a substrate to a desired position without processing a substrate by laser light.

That is, as a result of opening and closing the shutter while transferring the working stage, the focal point of the laser light can blink while the movement thereof is carried out in the substrate.

As long as the laser light has a sufficient intensity, in the locus of the focal point, modification is performed in an area in which the shutter is opened and modification is not performed in an area in which the shutter is closed.

In the manufacturing apparatus of the first embodiment, a practical scanning rate of the working stage, a practical repetition rate of the laser light source, or a practical opening and closing of the shutter may be monitored by the calculation unit.

A block diagram shown in FIG. 21 illustrates a process in which a practical value of the repetition rate of the laser light is input from the laser light source to the calculation unit, and the calculation unit receives the input and outputs to the working stage, a signal used in operation at the scanning rate or the scanning rate which satisfy the Formula (1) in the manufacturing apparatus of the first embodiment.

Although not shown, the calculation unit may monitor a scanning rate of the working stage.

A block diagram shown in FIG. 22 illustrates a process in which a practical value of the repetition rate of the laser light is input from the laser light source to the calculation unit, and the calculation unit receives the input and outputs to the working stage, a signal used in operation at the scanning rate or the scanning rate which satisfy the Formula (1) in the manufacturing apparatus of the first embodiment.

Furthermore, the calculation unit receives the input, in the case where the input reaches a predetermined repetition rate, the calculation unit outputs to the optical system, a signal used to open the shutter or a signal used to increase the intensity of the laser light with which the substrate is irradiated.

In the case where the input is less than a predetermined repetition rate, the calculation unit outputs to the optical system, a signal used to close the shutter or a signal used to decrease the intensity of the laser light with which a substrate is irradiated (at the intensity, the laser machining cannot be substantially realized).

The working stage and the substrate may be transferred during light shielding or reduction in amount of the laser light.

The working stage may accelerate or decelerate or the direction of movement may be changed in a state where the laser machining is not carried out.

The movement of the locus of the laser focal point according to the movement of the working stage may be calculated by the calculation unit.

A block diagram shown in FIG. 23 illustrates a feedback process of a practical value of the scanning rate from the working stage to the calculation unit in addition to outputting a signal or a value of the scanning rate from the calculation unit to the working stage in the manufacturing apparatus of the first embodiment.

Although not shown, regarding a practical opening-closing state of the shutter or the like, feedback from the optical system to the calculation unit may be carried out.

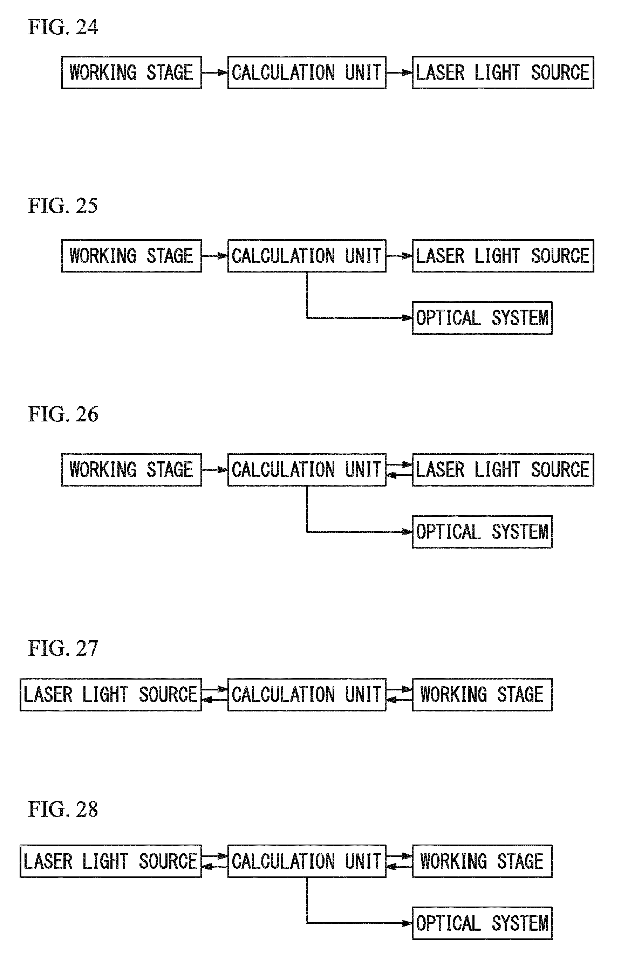

A block diagram shown in FIG. 24 illustrates a process in which a practical value of the rate of movement of the working stage (scanning rate of the focal point of the laser light) is input from the working stage to the calculation unit, the calculation unit receives the input and outputs the laser light source, a value of the repetition rate that satisfies the Formula (1) or a signal used in an operation at the repetition rate in the manufacturing apparatus of the first embodiment.

A block diagram shown in FIG. 25 illustrates a process in which a practical value of the rate of movement of the working stage is input from the working stage to the calculation unit, the calculation unit receives the input and outputs the working stage, a value of the repetition rate that satisfies the Formula (1) or a signal used in an operation at the repetition rate in the manufacturing apparatus of the first embodiment.

Furthermore, the calculation unit receives the input, in the case where the input reaches a predetermined scanning rate, the calculation unit outputs to the optical system, a signal used to open the shutter or a signal used to increase the intensity of the laser light with which the substrate is irradiated.

In the case where the input is less than a predetermined speed or exceeds a predetermined speed, the calculation unit outputs to the optical system, a signal used to close the shutter or a signal used to decrease the intensity of the laser light with which a substrate is irradiated (at the intensity, the laser machining cannot be substantially realized).

A repetition rate of the laser light source may be adjusted during light shielding or reduction in amount of the laser light.

The working stage may accelerate or decelerate or the direction of movement may be changed in a state where the laser machining is not carried out.

The movement of the locus of the laser focal point according to the movement of the working stage may be calculated by the calculation unit.

A block diagram shown in FIG. 26 indicates a feedback process of a practical value of the repetition rate from the laser light source to the calculation unit in addition to outputting a signal or a value of the repetition rate from the calculation unit to the laser light source in the manufacturing apparatus of the first embodiment.

Although not shown, regarding a practical opening-closing state of the shutter or the like, feedback from the optical system to the calculation unit may be carried out.

A block diagram shown in FIG. 27 illustrates a process in which the calculation unit and the working stage reciprocally transmit and receive an operation signal or numerical value in the manufacturing apparatus of the first embodiment, the laser light source.

A block diagram shown in FIG. 28 illustrates a process in which the calculation unit and the working stage reciprocally transmit and receive an operation signal or numerical value in the manufacturing apparatus of the first embodiment, the laser light source.

Furthermore, the calculation unit transmits a signal to an optical system in the illustrated process.

Although not shown, a signal may be transmitted from the optical system to the calculation unit or the calculation unit and the optical system may reciprocally transmit and receive a signal.

As a manufacturing apparatus of a second embodiment which is suitable for use in the above-described manufacturing method, for example, an apparatus that includes at least a first unit that generates laser light having a pulse duration less than 10 picoseconds and a second unit that scans a desired region inside the substrate with the focal point of the laser light and is used in the modifying step of the above-described manufacturing method is adopted.

As first unit, for example, the laser light source is adopted.

As the second unit, for example, the working stage is adopted.

As a manufacturing apparatus of a third embodiment which is suitable for use in the above-described manufacturing method, for example, and an apparatus that includes: a support unit for the substrate; a laser light irradiation unit; a transfer unit used in the scanning by the focal point; a control unit controlling the repetition rate and the scanning rate, wherein the control unit controls the transfer unit so that the scanning rate is $1\times10^3$ to $4000\times10^3$ $\mu$m/sec and controls the repetition rate of the laser light the irradiation unit so that the pulse pitch is 0.08 to 0.8 $\mu$m based on the Formula (1) is adopted.

As the support unit, for example, the working stage is adopted.

As the irradiation unit, for example, the laser light source is adopted.

As the transfer unit, for example, a drive unit that drives the working stage is adopted.

As the control unit, for example, the calculation unit is adopted.

It is preferable that the control unit control the laser irradiation unit and the transfer unit based on the combination of the repetition rate and the scanning rate which are included in the area surrounded by hatched lines in the chart.

As a manufacturing apparatus of a fourth embodiment which is suitable for use in the above-described manufacturing method, for example, and an apparatus that irradiates a substrate with laser light having a pulse duration less than 10 picoseconds, scans the inside of the substrate with a focal point into which the laser light is collected, and thereby forms a modified region having a lowered resistance to etching at a region through which the focal point passed or at an adjacent region thereof (circumference), that includes: a support unit for the substrate; an irradiation unit that carries out irradiation by the laser light at a predetermined repetition rate (Hz); a transfer unit that scans the inside of the substrate with the focal point at the scanning rate ($\mu$m/sec) of the laser light that is defined as a relative speed of the focal point relative to the substrate when the focal point of the laser light moves by moving the support unit or the laser irradiation unit; and a control unit controls the repetition rate and the scanning rate, wherein the control unit controls the transfer unit so that the scanning rate is $1\times10^3$ to $4000\times10^3$ $\mu$m/sec and controls the repetition rate of the laser light of the irradiation unit so that the pulse pitch is 0.08 to 0.8 $\mu$m based on the Formula (1) is adopted.

As the support unit, for example, the working stage is adopted.

As the irradiation unit, for example, the laser light source is adopted.

As the transfer unit, for example, a drive unit that drives the working stage is adopted.

As the control unit, for example, the calculation unit is adopted.

It is preferable that the control unit control the laser irradiation unit and the transfer unit based on the combination of the repetition rate and the scanning rate which are included in the area surrounded by hatched lines in the chart.

Examples

(Test Example 1)

As shown in FIG. 1, a modified region 1 that is parallel to a first surface 1a of a silica glass substrate 1 was formed by use of titanium-sapphire laser under irradiation conditions described below.

A length of the formed modified region 1 in the longitudinal direction thereof was 20 mm, and a diameter of the modified region was approximately 5 $\mu$m at a maximum.

(Irradiation Condition)

A wavelength is 800 nm, a spectral bandwidth is 10 nm, a pulse duration is up to 220 fs, a numerical aperture of an object lens (N.A.) is 0.5, a polarized light is a circular polarized light, an angle formed between the optical axis and the scanning direction is 90 degrees, and the peak intensity (laser fluence per unit pulse / pulse duration) is 50 TW/cm$^2$.

The scanning rate ($\mu$m/sec) and the repetition rate (kHz) were adjusted in the range of 500 to $20\times10^3$ $\mu$m/sec and 10 to 200 kHz, respectively, so as to obtain a predetermined pulse pitch.

Scanning was carried out so that the focal points, each of which is one pulse, are shifted so as to overlap each other.

The cross-sectional face of the modified region which is orthogonal to the longitudinal direction thereof was exposed to a substrate surface, and etching was carried out under the condition where etchant = KOH water solution (15 wt%), temperature = 80 degrees, and etching time = 3 hours.

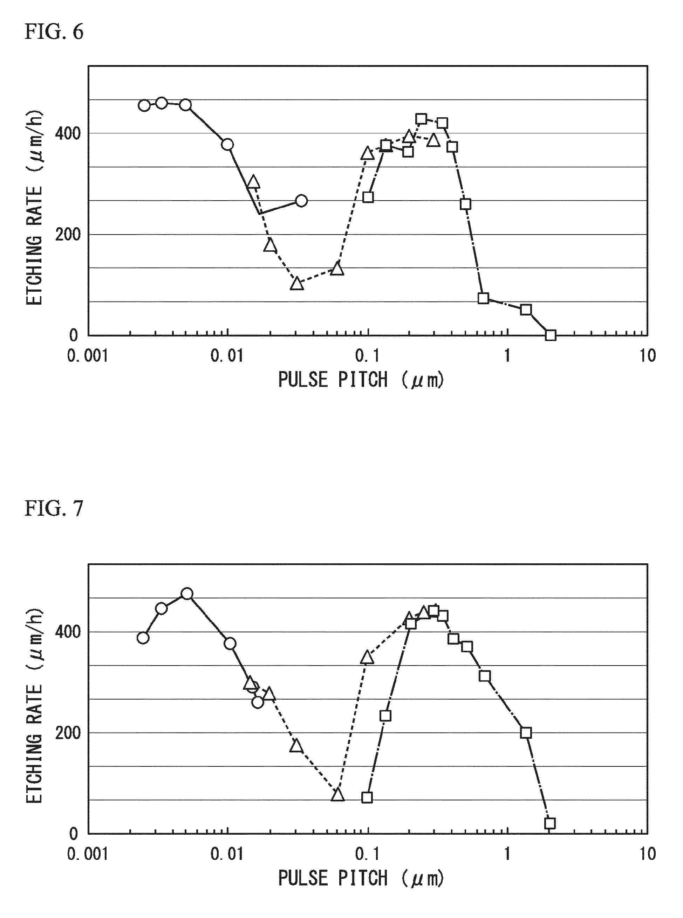

The results are shown in FIG. 6.

In FIG. 6, a plot group represented by "○" means a scanning rate of 500 $\mu$m/sec, a plot group represented by "Δ" means a scanning rate of 3000 $\mu$m/sec, and a plot group represented by "□" means a scanning rate = 20000 $\mu$m/sec.

In all cases of the scanning rates, the peak intensity is 50 TW/cm$^2$.

From this result, in the pulse pitch range of 0.1 to 0.5 $\mu$m, it is understood that the plot group represented by "□" according to the invention realizes the etching rate substantially equal to the plot group represented by "○" according to a conventional method.

Particularly, in the plot group represented by "□", a first modified region, a second modified region, and two micro holes corresponding thereto were formed in all cases of the pulse pitches.

In the case where the cross section of the first modified region is similar to an elliptical shape, the major axis of the ellipse was 2.5 $\mu$m, and the minor axis of the ellipse was 2 $\mu$m.

Furthermore, a cross-sectional face of the micro hole corresponding to the first modified region is an ellipse, the major axis of the ellipse was 3.7 $\mu$m, and the minor axis of the ellipse was 3.2 $\mu$m.

(Test Example 2)

Except for changing the peak intensity of the laser light to 70 TW/cm$^2$, the test example 2 was carried out in a manner similar to the test example 1.

The results are shown in FIG. 7.

However, in FIG. 7, a plot group represented by "○" means a scanning rate of 500 $\mu$m/sec, a plot group represented by "Δ" means a scanning rate of 3000 $\mu$m/sec, and a plot group represented by "□" means a scanning rate of 20000 $\mu$m/sec.

From this result, in the pulse pitch range of 0.08 to 0.8 $\mu$m, it is understood that the plot group represented by "□" according to the invention realizes the etching rate substantially equal to the plot group represented by "○" according to a conventional method.

Particularly, in the plot group represented by "□", a first modified region, a second modified region, and two micro holes corresponding thereto were formed in all cases of the pulse pitches.

In the case where the cross section of the first modified region is similar to an elliptical shape, the major axis of the ellipse was 2.5 µm, and the minor axis of the ellipse was 2 µm.

Furthermore, a cross-sectional face of the micro hole corresponding to the first modified region is an ellipse, the major axis of the ellipse was 3.7 µm, and the minor axis of the ellipse was 3.2 µm.

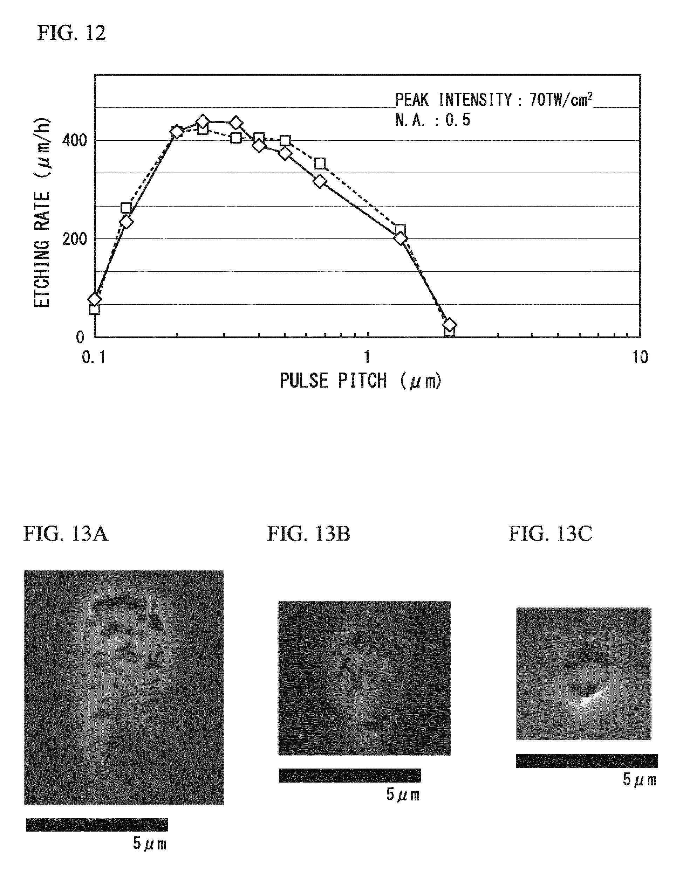

Regarding the aforementioned plot group represented by "○", a SEM image of the cross section orthogonal to the longitudinal direction the modified region that was formed in a state where a pulse pitch is 0.015 µm and a SEM image of the cross section in the longitudinal direction are shown in FIGS. 13A and 14A, respectively.

Regarding the aforementioned plot group represented by "△", a SEM image of the cross section orthogonal to the longitudinal direction the modified region that was formed in a state where a pulse pitch is 0.06 µm and a SEM image of the cross section in the longitudinal direction are shown in FIGS. 13B and 14B, respectively.

Regarding the aforementioned plot group represented by "□", a SEM image of the cross section orthogonal to the longitudinal direction the modified region that was formed in a state where a pulse pitch is 0.3 µm and a SEM image of the cross section in the longitudinal direction are shown in FIGS. 13C and 14C, respectively.

The cross sections shown in FIGS. 13A to 13C and 14A to 14C are the SEM images which are obtained by: forming modified regions, thereafter, exposing the modified regions by polishing a substrate, carrying out a slight etching treatment, where a 0.5 wt% hydrofluoric acid water solution is used at a normal temperature and for 8 minutes, to the surface to which the modified regions are exposed, after that, observing the cross sections.

As a result of carrying out such slight etching treatment, it is possible to etch the substrate and the uppermost surface of the modified region.

Subsequently, the modified region is exposed and a state of the modified region can be simply observed.

In FIGS. 14A to 14C, the horizontal lines shown in the left cross section (cross-sectional face corresponding to a diameter of the modified region) mean the right cross sections (cross section in the longitudinal direction of the modified region).

It is found from FIG. 13A and 14A that, in the case of a laser irradiation condition corresponding to the plot group represented by the above-mentioned "○", that is, in the case where a pulse pitch is greater than or equal to 0.002 µm and less than 0.02 µm, an appearance where dotted (spherical-shaped) modified regions are continuously arranged and formed in the longitudinal direction of the modified region and a uniform modified region is entirely and continuously formed in the modified region in the longitudinal direction thereof.

Inside the dotted modified region that is formed in the above pulse pitch range, a nanostructure (black-colored points of the modified region in SEM image) is formed in which a resistance to etching is particularly low.

It is conceivable that, as a result of selectively etching the nanostructure in an etching step, since the dotted modified regions which are continuously formed and are adjacent to each other are easily communicated, the etching easily proceeds in the longitudinal direction of the modified region (laser scanning direction).

Particularly, it is difficult to expressly get micro portions of the nanostructure from the SEM image; however, in the case of observing a higher resolution SEM image, a microstructure that may be referred to as a nanostructure is observed.

It is found from FIGS. 13B and 14B that, in the case of a laser irradiation condition corresponding to the plot group represented by the above-mentioned "△", that is, in the case where a pulse pitch is greater than or equal to 0.02 µm and less than 0.08 µm, an appearance where dotted (spherical-shaped) modified regions are intermittently formed in the longitudinal direction of the modified region.

Moreover, the intermediate between the dotted modified regions adjacent to each other is observed such as having a resistance to etching which is similar to that of the region which is not irradiated with laser light despite the fact that is irradiated with laser light.

Consequently, it is thought that, it is difficult for etching to proceed in the longitudinal direction (laser scanning direction) of the modified region.

A formation mechanism of the dotted modified regions (hereinbelow, may simply be referred to as a dot) has not been clarified in detail yet; however, as an example, the following mechanism is conceivable.

(1) Firstly, as a factor (reason), a plasma wave or plasmon generated at laser light collecting portion forms a periodic nanostructure, and furthermore a moiré pattern which is due to slight displacement in the period thereof is formed, or a reciprocal action which is a plurality of laser pulses occur; as a result, a first dot to be formed which is due to the factor.

(2) Next, a light-collecting portion of laser light slightly moves to the scanning direction; however, a plasma wave or plasmon which is generated by a later laser pulse is returned to the previously-formed dot and trapped in the dot, and a degree of modification of the previously-formed dot thereby increases.

Furthermore, it is thought that, when the light-collecting portion moves, the previously-formed dot interferes with concentration of the laser light, and a modified region may not be formed.

(3) Thereafter, due to a large movement of the light-collecting portion of laser light in the scanning direction, a later laser pulse is released from a state of being trapped, and laser pulse is concentrated in a new position adjacent to the previously-formed dot.

As a result, a new dot is formed at a position adjacent to the previously-formed (in advance) dot.

It is conceivable that the dots are continuously arranged and formed at a distance therebetween by reiteration of the above- described (1) to (3).

With reference to FIGS. 13C and 14C, in the case of a laser irradiation condition corresponding to the aforementioned plot group represented by "□", that is, in the case where a pulse pitch is 0.08 to 0.8 $\mu$m, a streaky structure having periodicity on the order of submicrons is formed in the modified region in the longitudinal direction thereof.

The periodicity on the order of submicrons conspicuously appear in the lower right SEM image shown in FIG. 14C.

A formation mechanism of the periodic structure has not been clarified in detail yet; however, as an example, the following mechanism is conceivable.

The scanning rate of the laser of the manufacturing method of the first embodiment of the invention is faster than that in the prior art; therefore, in the case where the pulse pitch is in the range of 0.08 to 0.8 $\mu$m, the number of the laser irradiation pulses per unit length in the scanning direction is relatively small.

According to the above result, since the dot is not formed or since a considerable effect does not occur even where the dot is formed, the trapping of a plasma wave or plasmon which is due to the above dot does not occur.

Instead of formation of the dot, periodic structure having the order of submicrons is formed by the plasma wave or the plasmon in the modified region in the longitudinal direction thereof.

When the formed modified region is observed along the longitudinal direction, a degree of modification which means sparse or dense is relatively low, and the periodic structure having the order of submicrons is uniformly and continuously formed.

With reference to the left in FIG. 14C, it is understood that regions in which etching selectivities particularly decrease are separated into two places which are an upper place and a lower place in cross section corresponding to a diameter of the modified region.

It is conceivable that the upper place of the regions significantly contributes to the formation of the micro hole (etching selectivity necessary thereto).

As evidenced by the SEM image shown in the upper right of FIG. 14C, the modified region which is formed in the region of the upper place is smoothly communicated in the longitudinal direction.

According to the SEM image, the region is observed such that a crack or a strain occurs therein.

It is thought that, in the case where such a crack or a strain is produced, the etching solution is transmitted through the rack or the strain and easily infiltrates (easily proceed) into the modified region in the longitudinal direction thereof in the step of etching the modified region.

Therefore, according to the manufacturing method of the first embodiment of the invention, even where the pulse pitch increases and the irradiation energy per unit area lower than that in the prior art, since the crack or the strain is formed in the modified region, the etching rate in the longitudinal direction thereof can be higher than or equal to that in the prior art.

As a result of reducing the accumulated laser irradiation energy per unit area as remarked above, it is possible to reduce (decrease) a so-called photon cost.

Reduction in photon cost is abundantly useful from the viewpoint of improvement in processing throughput, electric power saving, cutting of investment in facility, or the like.

Furthermore, in the case of a laser irradiation condition corresponding to the aforementioned plot group represented by "□", that is, in the case where a pulse pitch is 0.08 to 0.8 $\mu$m, a separate modified region (second modified region 4) is formed in the optical axis direction (laser light traveling direction) of the modified region shown in FIG. 14C (the first modified region 3).

That is, as shown in FIG. 3, two modified regions of the first modified region 3 and the second modified regions 4 are formed along a plane of the substrate and arranged to the optical axis direction of the laser light.

FIG. 15 illustrates a SEM image of the cross section corresponding to the diameters of the first modified region 3 and the second modified region 4.

As mentioned above, it is conceivable that a mechanism in which two modified regions are formed in the above-described manner is caused by a phenomenon (filamentation) that a plurality of laser-light collecting portions is formed in the optical axis direction.

Each of a micro hole corresponding to the first modified region 3 and a micro hole corresponding to the second modified region 4 can be formed by the etching treatment.

On the other hand, in the case of a laser irradiation condition corresponding to the plot group represented by the above-mentioned "∆", that is, in the case where a pulse pitch is greater than or equal to 0.02 $\mu$m and less than 0.08 $\mu$m, and in the case of a laser irradiation condition corresponding to the plot group represented by the above-mentioned "○", that is, in the case where a pulse pitch is greater than or equal to 0.002 $\mu$m and less than 0.02 $\mu$m, the first modified region 3 is only formed.

Even under such conditions, there is a possibility that filamentation occurs; however, it is believed that, since the lower modified region disappears due to any reason or does not have a sufficient etching selectivity, a modified region at which a micro hole can be formed is not formed.

This mechanism has not been clarified; however, it is conceivable that, as the number of laser pulses per unit length of the modified region increases, the upper modified region interferes with filamentation, the laser light is disturbed, and the disturbed laser light causes the modified region that is temporarily formed at the lower side to disappear, or it is conceivable that the disturbed laser light cannot form a modified region having a sufficient etching selectivity.

(Test Example 3)

Except for setting the peak intensity to 20, 50, 70, and 90 TW/cm$^2$, the test example 3 was carried out in a manner similar to the test example 1.

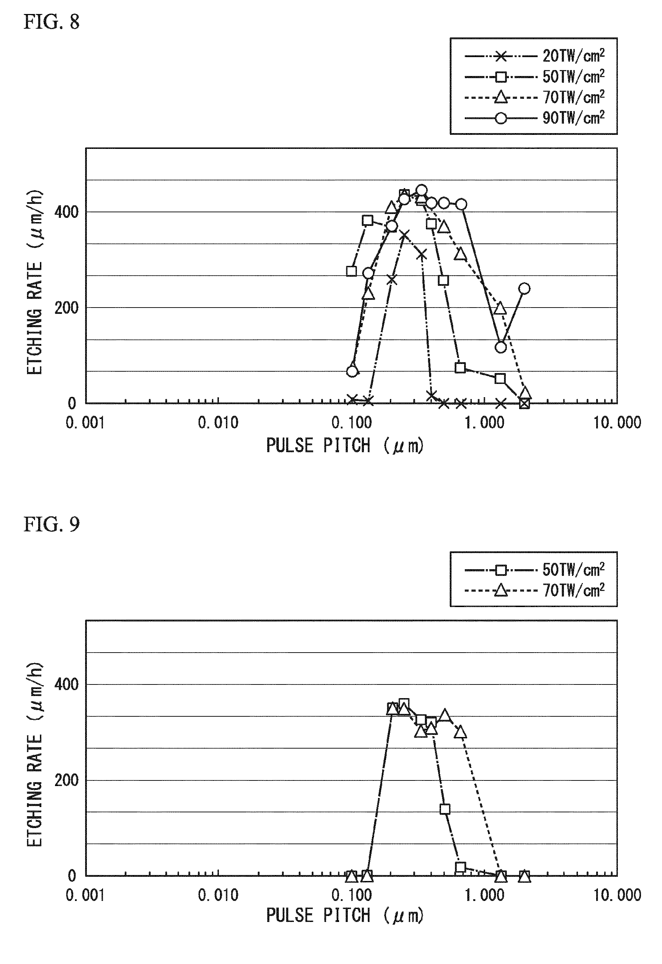

The results are shown in FIG. 8.

However, in FIG. 8, in all of a plot group represented by "×" (20 TW/cm$^2$), a plot group represented by "□" (50 TW/cm$^2$), a plot group represented by "Δ" (70 TW/cm$^2$), and a plot group represented by "○" (90 TW/cm$^2$), a scanning rate is 20 mm/s.

According to the above results, it could be seen that the etching rate does not depend on the peak intensity in the pulse pitch range of 0.08 to 0.8 μm and the etching rate is particularly high in the pulse pitch of approximately 0.25 μm (0.20 to 0.30 μm).

Additionally, it is understood that, as the peak intensity becomes high, the region in which the etching rate particularly high expands to be directed to an area in which a pulse pitch is large.

Moreover, a first modified region, a second modified region, and two micro holes corresponding thereto were formed in all cases of the peak intensities.

In the plot group represented by "×", in a case where the cross section of the first modified region is similar to an ellipse, the major axis of the ellipse was 2.5 μm, and the minor axis of the ellipse was 2 μm.

Furthermore, a cross-sectional face of the micro hole corresponding to the first modified region is an ellipse, the major axis of the ellipse was 3.7 μm, and the minor axis of the ellipse was 3.2 μm.

In the plot group represented by "□", in a case where the cross section of the first modified region is similar to an ellipse, the major axis of the ellipse was 2.5 μm, and the minor axis of the ellipse was 2 μm.

Furthermore, a cross-sectional face of the micro hole corresponding to the first modified region is an ellipse, the major axis of the ellipse was 3.7 μm, and the minor axis of the ellipse was 3.2 μm.

In the plot group represented by "Δ", in a case where the cross section of the first modified region is similar to an ellipse, the major axis of the ellipse was 2.5 μm, and the minor axis of the ellipse was 2 μm.

Furthermore, a cross-sectional face of the micro hole corresponding to the first modified region is an ellipse, the major axis of the ellipse was 3.7 μm, and the minor axis of the ellipse was 3.2 μm.

In the plot group represented by "○", in a case where the cross section of the first modified region is similar to an ellipse, the major axis of the ellipse was 5.4 μm, and the minor axis of the ellipse was 3.3 μm.

Furthermore, a cross-sectional face of the micro hole corresponding to the first modified region is an ellipse, the major axis of the ellipse was 6.4 μm, and the minor axis of the ellipse was 4.5 μm.

In the aforementioned result, the diameters of the first modified regions that are formed under the peak intensities of 70 TW/cm$^2$ or less are substantially the same as each other; however, diameters of the first modified regions that are formed under the peak intensity higher than 70 TW/cm$^2$ become larger.

Because of this, in the case of performing irradiation at the peak intensity of 70 TW/cm$^2$ or less, even where the peak intensity of laser varies, first modified regions having the same diameter are formed almost without being affected by this variation, and it is thereby possible to carry out stable laser irradiation.

(Test Example 4)

Except for changing a numerical aperture of a lens (N.A.) to 0.25, the test example 4 was carried out in a manner similar to the test example 3.

The results are shown in FIG. 9.

However, in FIG. 9, in all of a plot group represented by "□" (50 TW/cm$^2$) and a plot group represented by "Δ" (70 TW/cm$^2$), a scanning rate is 20 mm/s.

In this test example, since a laser beam diameter is smaller than the opening diameter of an object lens, it is believed that a practical numerical aperture (N.A.) of the laser beam is becomes smaller.

For this reason, it is conceivable that practical peak intensities become smaller than that of the present description.

The first modified region and one micro hole corresponding thereto were formed under a condition of 50 TW/cm$^2$,

and a first modified region, a second modified region, and two micro holes corresponding thereto were formed under a condition of 70 TW/cm$^2$.

(Test Example 5)

Except for changing a numerical aperture of a lens (N.A.) to 0.8, the test example 5 was carried out in a manner similar to the test example 3.

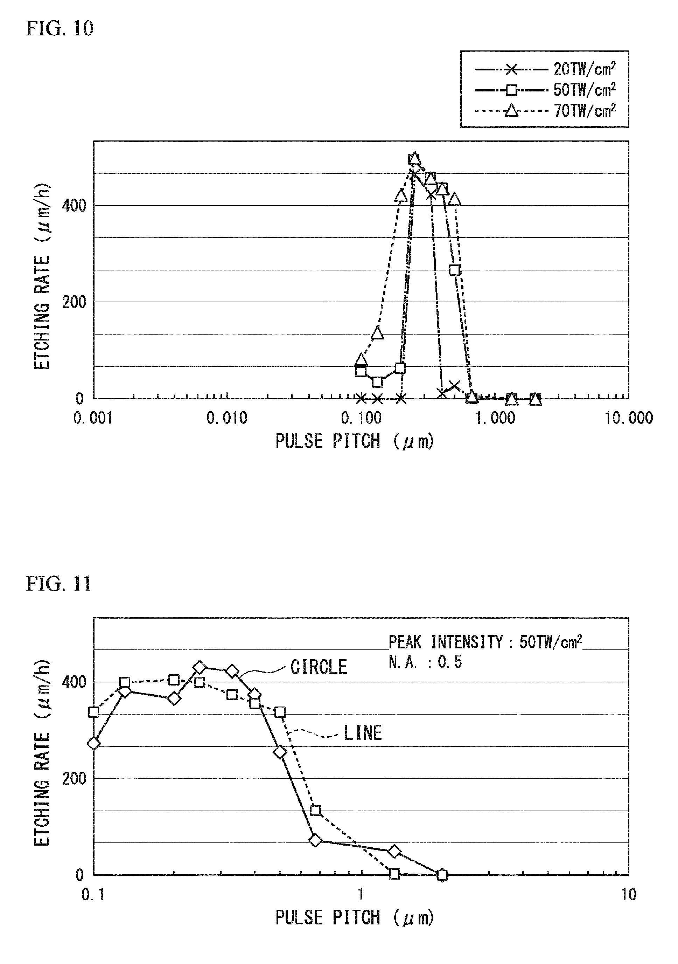

The results are shown in FIG. 10.

However, in FIG. 10, in all of a plot group represented by "×" (20 TW/cm$^2$), a plot group represented by "□" (50 TW/cm$^2$), and a plot group represented by "Δ" (70 TW/cm$^2$), a scanning rate is 20 mm/s.

From the test examples 3 to 5, it is conceivable that, even where a numerical aperture of a lens (N.A.), that is, a spot diameter of laser light varies, the pulse pitch range of (approximately 0.25 μm), in which the etching rate particularly becomes faster, does not vary.

In short, the optimal range of the pulse pitch does not depend on a spot diameter of laser.

Under the peak intensity conditions of 20 TW/cm$^2$ and 50 TW/cm$^2$, a first modified region, a second modified region, and micro holes corresponding to the respective modified region were formed.

Under the peak intensity condition of 70 TW/cm$^2$, a first modified region, a second modified region, and a third modified region were arranged and formed along the optical axis direction of the laser light, and furthermore a micro hole corresponding to each modified region was formed.

(Test Example 6)

Except for changing the polarized light of the laser to a linear polarized light and for setting the electric field direction of the polarized light to be orthogonal to the laser scanning direction, the test example 6 was carried out in a manner similar to the test example 1.

In FIG. 11, the results thereof are shown by a plot group represented by "□", and the results of the test example 1 are represented by "◇".

According to the above results, it is understood that a linear polarized light or a circular polarized light may be adopted as laser.

A first modified region, a second modified region, and two micro holes corresponding thereto were formed in all cases of the polarized lights of the lasers.

(Test Example 7)

Except for changing the polarized light of the laser to a linear polarized light or a circular polarized light, except for setting the electric field direction of the polarized light to be orthogonal to the laser scanning direction, and except for setting the peak intensity to 70 TW/cm$^2$, the test example 7 was carried out in a manner similar to the test example 1.

In FIG. 12, the results thereof are shown by a plot group represented by "□" (linear polarized light) and shown by a plot group represented by "◇" (circular polarized light).

According to the above results, it is understood that a linear polarized light or a circular polarized light may be adopted as laser.

(Test Example 8)

With the exception that irradiation conditions are changed as described below, modified regions were formed in a manner similar to the test example 1.

The peak intensity was set to 50 TW/cm$^2$, a scanning rate was set to 0.5 mm/s or 20 mm/s, and a repetition rate of pulsed laser light was set to 30 kHz, 50 kHz, or 100 kHz.

After modified regions were formed, they were etched by a KOH water solution in a manner similar to the test example 1, and the etching rates (μm/h) thereof were calculated.

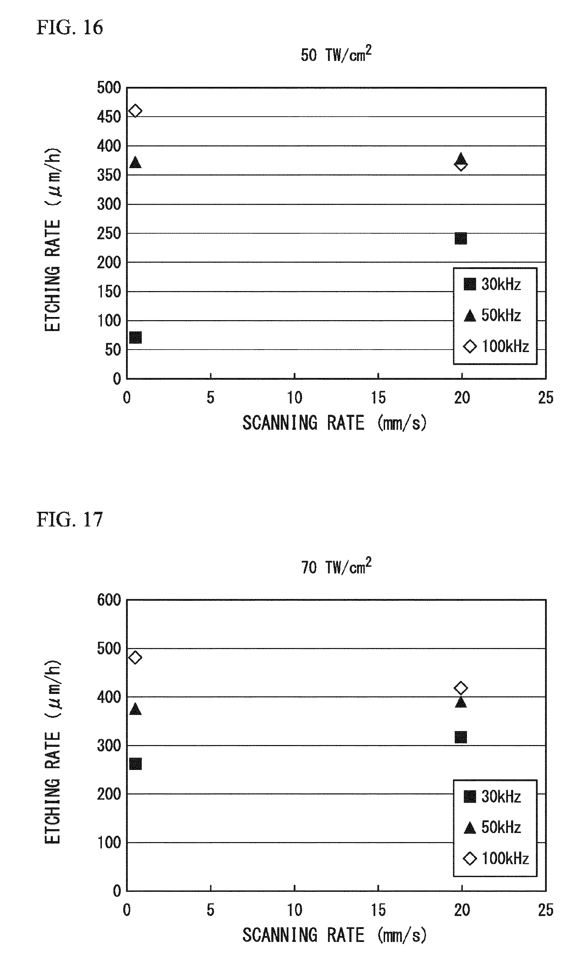

The results are shown in FIG. 16.

Particularly, in data in the case where the scanning rate of the focal point is 0.5 mm/s, since all pulse pitches are less than 0.08 μm, it is not included in the invention.

(Test Example 9)

Except for changing the peak intensity to 70 TW/cm$^2$, the test example was carried out in a manner similar to the test example 8, and the etching rates (μm/h) thereof were calculated.

The results are shown in FIG. 17.

Particularly, in data in the case where the scanning rate of the focal point is 0.5 mm/s, since all pulse pitches are less than 0.08 $\mu$m, it is not included in the invention.

FIGS. 16 and 17 are charts illustrating a relationship between the scanning rate of the focal point and the etching rate of the modified region.

Even where the scanning rate of the focal point is made higher such as from 0.5 mm/s to 20 mm/s, the etching rate does not significantly decrease, and etching proceeds.

As an example, in data of the repetition rate of 100 kHz shown in FIG. 16, even where the scanning rate of the focal point becomes higher such as from 0.5 mm/s to 20 mm/s, reduction in etching rate remains such as being approximately 23%.

A degree of reduction in efficiency of the etching step which is due to such reduction in etching rate is quite small in comparison to a degree of improvement in efficiency of the modifying step which is due to a higher scanning rate.

In short, it is possible to realize the improvement in the efficiency of overall process by speeding up the modifying step.

Furthermore, according to data at the repetition rate of 30 kHz, a result that the progression rate of the etching significantly increases by increasing the scanning rate is obtained.

Moreover, from the results of FIGS. 16 and 17, as a result of increasing the scanning rate of the focal point, a variation in etching rate for each repetition rate tends to be reduced.

As an example, in FIG. 16, the etching rate is from the minimum 75 $\mu$m/h (30 kHz) to the maximum 460 $\mu$m/h (100 kHz) at the scanning rate of 0.5 mm/s.

On the other hand, the minimum is 290 $\mu$m/h (30 kHz) and the maximum is 375 $\mu$m/h (50 kHz) at the scanning rate of 20 mm/s.

In comparison to the case where the scanning rate of the focal point is a low speed, in the case of a high speed, a variation in etching rate tends to be reduced.

The constitutions, combinations thereof, or the like which are illustrated in the above-described embodiments are examples, additions of constitutions, omissions, substitutions, and other modifications can be made without departing from the scope of the invention.

Accordingly, the invention is not to be considered as being limited by each embodiment, and is only limited by the scope of the appended claims.

**Claims**

1. A method of manufacturing a substrate including a micro hole, comprising:

   setting a scanning rate ($\mu$m/sec) of pulsed laser light to $1 \times 10^3$ to $4000 \times 10^3$ $\mu$m/sec, the scanning rate being defined as a relative speed of a focal point of the laser light relative to a substrate when the focal point moves, the laser light having a pulse duration less than 10 picoseconds;
   adjusting a repetition rate (Hz) of the laser light so that a pulse pitch ($\mu$m) represented by the following Formula (1) is 0.08 to 0.8 $\mu$m;
   irradiating the substrate with the laser light, scanning the inside of the substrate with the focal point into which the laser light is collected while shifting the focal point at a constant scanning rate so as to overlap the focal points, each of which is one pusle, thereby forming a modified region having a lowered resistance to etching, at a region through which the focal point passed or at an adjacent region thereof; and
   forming a micro hole in the substrate by removing the modified region by an etching treatment.

$$\text{Formula (1)} \cdots \text{pulse pitch } (\mu m) =$$

$$\{\text{the scanning rate } (\mu m/sec) \text{ of the laser light}\} / \{\text{the repetition rate (Hz) of the laser light}\}$$

2. The method of manufacturing a substrate including a micro hole according to claim 1, further comprising forming a plurality of modified regions in an optical axis direction of the laser by one-time scanning by the laser light.

3. The method of manufacturing a substrate including a micro hole according to claim 2, further comprising forming a plurality of micro holes by etching the modified regions.

4. The method of manufacturing a substrate including a micro hole according to any one of claims 1 to 3, wherein

a peak intensity of one pulse of the laser light is greater than or equal to 7 TW/cm$^2$.

FIG. 1

FIG. 2

FIG. 3

FIG. 4

INTENSITY DISTRIBUTION IN LASER LIGHT

DISTRIBUTION OF REFRACTIVE INDEX

INTENSITY OR REFRACTIVE INDEX

POSITION ORTHOGONAL TO OPTICAL AXIS DIRECTION OF LASER

FIG. 5

L

F1

F2

F3

D1

FIG. 6

FIG. 7

FIG. 8

FIG. 9

FIG. 10

FIG. 11

FIG. 12

FIG. 13A

5 μm

FIG. 13B

5 μm

FIG. 13C

5 μm

FIG. 14A

5 μm

10 μm

FIG. 14B

5 μm

10 μm

FIG. 14C

5 μm

10 μm

FIG. 15

3

4

113359 10.0kV X10.0K 3.00μm

FIG. 16

50 TW/cm$^2$

FIG. 17

70 TW/cm$^2$

FIG. 18

FIG. 19

FIG. 20

```
┌──────────────────┐                          ┌──────────────────┐
│ CALCULATION UNIT │─────────────────────────▶│  WORKING STAGE   │
└──────────────────┘                          └──────────────────┘

                                              ┌──────────────────┐
                                         ────▶│ LASER LIGHT SOURCE│
                                              └──────────────────┘

                                              ┌──────────────────┐
                                         ────▶│  OPTICAL SYSTEM  │
                                              └──────────────────┘
```

FIG. 21

```
┌───────────────────┐    ┌──────────────────┐    ┌──────────────────┐
│ LASER LIGHT SOURCE│───▶│ CALCULATION UNIT │───▶│  WORKING STAGE   │
└───────────────────┘    └──────────────────┘    └──────────────────┘
```

FIG. 22

```
┌───────────────────┐    ┌──────────────────┐    ┌──────────────────┐
│ LASER LIGHT SOURCE│───▶│ CALCULATION UNIT │───▶│  WORKING STAGE   │
└───────────────────┘    └──────────────────┘    └──────────────────┘
                                                  ┌──────────────────┐
                                             ────▶│  OPTICAL SYSTEM  │
                                                  └──────────────────┘
```

FIG. 23

```
┌───────────────────┐    ┌──────────────────┐    ┌──────────────────┐
│ LASER LIGHT SOURCE│───▶│ CALCULATION UNIT │◀───│  WORKING STAGE   │
└───────────────────┘    └──────────────────┘    └──────────────────┘
                                                  ┌──────────────────┐
                                             ────▶│  OPTICAL SYSTEM  │
                                                  └──────────────────┘
```

EP 2 762 264 A1

FIG. 24

WORKING STAGE → CALCULATION UNIT → LASER LIGHT SOURCE

FIG. 25

WORKING STAGE → CALCULATION UNIT → LASER LIGHT SOURCE
                                  → OPTICAL SYSTEM

FIG. 26

WORKING STAGE → CALCULATION UNIT ← LASER LIGHT SOURCE
                                → OPTICAL SYSTEM

FIG. 27

LASER LIGHT SOURCE ← CALCULATION UNIT ← WORKING STAGE

FIG. 28

LASER LIGHT SOURCE ⇄ CALCULATION UNIT ⇄ WORKING STAGE
                                   → OPTICAL SYSTEM

31

## INTERNATIONAL SEARCH REPORT

| International application No. |
|---|
| PCT/JP2012/076038 |

**A. CLASSIFICATION OF SUBJECT MATTER**
*B23K26/38*(2006.01)i, *B23K26/00*(2006.01)i, *B23K26/40*(2006.01)i, *C03C15/00* (2006.01)i

According to International Patent Classification (IPC) or to both national classification and IPC

**B. FIELDS SEARCHED**

Minimum documentation searched (classification system followed by classification symbols)
B23K26/38, B23K26/00, B23K26/40, C03C15/00

Documentation searched other than minimum documentation to the extent that such documents are included in the fields searched
| Jitsuyo Shinan Koho | 1922–1996 | Jitsuyo Shinan Toroku Koho | 1996–2012 |
| Kokai Jitsuyo Shinan Koho | 1971–2012 | Toroku Jitsuyo Shinan Koho | 1994–2012 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 2006-303360 A (Fujikura Ltd.), 02 November 2006 (02.11.2006), paragraphs [0027] to [0030]; fig. 11 to 14 (Family: none) | 1-4 |
| Y | JP 2008-6652 A (Aisin Seiki Co., Ltd.), 17 January 2008 (17.01.2008), claim 1; paragraphs [0015], [0035] to [0036], [0038] to [0039]; fig. 3 to 4 (Family: none) | 1-4 |
| A | JP 2008-98465 A (Aisin Seiki Co., Ltd.), 24 April 2008 (24.04.2008), claims 1, 7; paragraphs [0015], [0017], [0021]; fig. 1 & US 2007/0298529 A1 & TW 200805718 A | 1-4 |

☐ Further documents are listed in the continuation of Box C.　　☐ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| 22 November, 2012 (22.11.12) | 11 December, 2012 (11.12.12) |

| Name and mailing address of the ISA/ Japanese Patent Office | Authorized officer |
|---|---|
| Facsimile No. | Telephone No. |

Form PCT/ISA/210 (second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2011242326 A

- JP 2006303360 A

**Non-patent literature cited in the description**

- Polarization-selective etching in femtosecond laser-assisted microfluidic channel fabrication in fused silica. *Optics Letters*, 2005, vol. 30 (14), 1867-1869

- Fabrication of high-aspect ratio, micro-fluidic channels and tunnels using femtosecond laser pulses and chemical etching. *Optics Express*, 2004, vol. 12 (10), 2120-2129